# EUROPEAN PATENT APPLICATION

(11) **EP 0 823 301 A1**
(43) Date of publication of application: **11.02.1998**
(21) Application number: 97904627.3
(22) Date of filing: 24.02.1997
(51) Int. Cl.: B23C 5/10

(54) **END MILL**

(30) Priority: 26.02.1996 JP 65263/96; 20.09.1996 JP 271670/96
(71) Applicant: KANEFUSA KABUSIKI KAISHA, Niwa-gun, Aichi 480-01 (JP)
(72) Inventor: MUTO, Eisuke-Kanefusa Kabushiki Kaisha, Aichi 480-01 (JP); INOUE, Yoshihiro-Kanefusa Kabushiki Kaisha, Aichi 480-01 (JP)
(74) Representative: Miller, James Lionel Woolverton
(86) International application number: JP9700524
(87) International publication number: WO9730815

(57) **Abstract**

Each of flutes 13a and 13c provided on a body 12 is sub-flute whose extreme end does not pass through the extreme end of the body, and each of flutes 13b and 13d is main flute whose extreme end passes through the extreme end of the body. Two outer peripheral edge tips are mounted on a tip seat of each of the sub-flutes, and one bottom edge tip is mounted at an extreme end position of a tip seat of each of the main flutes. The sub-flute may be passed through the extreme end of the body and at least one end thereof may be communicated with the main flute. A bottom edge tip may be provided on the extreme end of the sub-flute passing through the extreme end of the body, in this case, the main flute need not pass through the extreme end, and the bottom edge tip need not be provided. In the boring processing, chips are smoothly moved within the main flute from which the outer peripheral edge tip is not projected and are discharged. In the enlarged hole processing, chips are once stored in the sub-flute but are released from the sub-flute after about half rotation.

## Description

### TECHNICAL FIELD

The present invention relates to an end mill used for cutting various materials such as lumber, woody materials, metal materials and plastics, etc.

### BACKGROUND OF ART

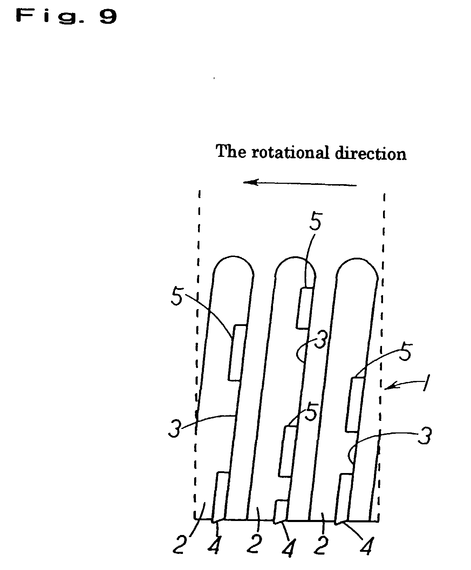

As one example of end mills of this kind, a so-called division cutting type end mill has been heretofore known in which as shown in a developed view of a body portion of FIG. 9, tips as cutting edges are secured by solder and the like to tip seats 3 provided along the outer peripheral edge on the rotational rear side of flutes (chip discharge grooves) 2 formed in a body 1 to form bottom edges 4 at the extreme end of the tip seat and outer peripheral edges 5 in the intermediary of the tip seat. The tips for forming the bottom edges 4 and the outer peripheral edges 5 are secured to the tip seats 3 so as to be projected into the flutes 2.

Since this end mill has the bottom edges 4 at the extreme end thereof, the bottom edges 4 are thrust in an axial direction from the surface of a material to be cut whereby a boring processing can be carried out. Further, since the end mill has the bottom edges 4 and the outer peripheral edges 5, they are moved relatively at right angles to the axial direction while the bottom edges 4 are thrust into the material to be cut (that is, in the state where the bottom edges are not extended through the material to be cut), then a groove processing can be also carried out. If they are moved relatively at right angles to the axial direction in the state where the bottom edges are extended through the material to be cut, a hole processing (hereinafter referred to as an enlarged hole processing) larger than the diameter of the end mill can be applied to the material to be cut. In the boring processing of the end mill, the chips cut by the bottom edges 4 are discharged only through the flute 2 since the circumference of the end mill is surrounded by the material to be cut. In the groove processing, the chips cut by the bottom edges 4 and the outer peripheral edges 5 are released upward through the flutes 2 or in the outer peripheral direction due to the function of the centrifugal force and discharged.

However, the tips of the outer peripheral edges 5 are projected into the flutes 2 as described above, and therefore, in the boring processing, the discharge of the chips is not smoothly carried out so that the chips are caught by the outer peripheral edge tips 5 and stopped up in the flutes 2, and a burn occurs in a processing surface or in a severe case, a cutting resistance increases and makes it impossible to continue processing. Further, not only at the time of the boring processing but also at the time of applying the groove processing to the surface of the material to be cut, when the property of discharging chips in the direction along the flutes is poor, a large quantity of chips released on the outer peripheral side are confined within the groove being processed, and chips generated later have no place to go and are stopped up within the flutes 2, likely resulting in a state similar to that previously mentioned.

The present invention is to solve the above-described problem. An object of the present invention is to provide an end mill having an excellent discharge property of chips.

### DISCLOSURE OF THE INVENTION

The characteristic in constitution of the first invention for achieving the aforementioned object lies in an end mill in which tips as cutting edges are secured to tip seats disposed along the outer periphery on the rotational rear side of plural flutes provided on a columnar body having a shank, characterized in that a main flute passing through an extreme end of the body and a sub-flute not passing through or passing through the extreme end are formed in the outer periphery of the body, a bottom edge tip is mounted only on the extreme end of the main flute, and an outer peripheral edge tip is mounted only on the sub-flute.

Furthermore, the characteristic in constitution of the second invention lies in an end mill in which tips as cutting edges are secured to tip seats disposed along the outer periphery on the rotational rear side of plural flutes provided on a columnar body having a shank, characterized in that a main flute passing through an extreme end of the body and a sub-flute branched off from the main flute to the shank side are formed in the outer periphery of the body, a bottom edge tip is mounted only on the extreme end of the main flute, and an outer peripheral edge tip is mounted only on the sub-flute.

Furthermore, the characteristic in constitution of the third invention lies in an end mill in which tips as cutting edges are secured to tip seats disposed along the outer periphery on the rotational rear side of plural flutes provided on a columnar body having a shank, characterized in that a main flute passing through an extreme end of the body and a sub-flute branched off from the main flute to the extreme end side are formed in the outer periphery of the body, a bottom edge tip is mounted only on the extreme end of the main flute, and an outer peripheral edge tip is mounted only on the sub-flute.

Furthermore, the characteristic in constitution of the forth invention lies in an end mill in which tips as cutting edges are secured to tip seats disposed along the outer periphery on the rotational rear side of plural flutes provided on a columnar body having a shank, characterized in that a main flute passing through an extreme end of the body and a sub-flute having at least one end communicated with the main flute are formed in the outer periphery of the body, a bottom edge tip is mounted only on the extreme end of the main flute, and an outer peripheral edge tip is mounted only on the sub-flute.

Furthermore, the characteristic in constitution of the fifth invention lies in an end mill in which tips as cutting edges are secured to tip seats disposed along the outer periphery on the rotational rear side of plural flutes provided on a columnar body having a shank, characterized in that a main flute passing through or not passing through an extreme end of the body and a sub-flute having at least one end communicated with the main flute are formed in the outer periphery of the body, a bottom edge tip is mounted only on the extreme end of a flute passing through the extreme end of the body out of the main flute and the sub-flute, and an outer peripheral edge tip is mounted on a place where the outer peripheral edge tip does not obstruct the discharge and movement of chips in the flute on which the bottom edge tip is not mounted.

Furthermore, the characteristic in constitution of the sixth invention lies in the end mill according to claim 5, wherein a sub-flute not communicated with the main flute and not passing through or passing through the extreme end of the body is added, and an outer peripheral edge tip is mounted on the sub-flute.

With the constitution of first to sixth inventions as described above, in the boring processing, the chips are smoothly moved within the main flute from which outer peripheral edge tips are not extended and are discharged. Further, in the enlarged hole processing, the cutting is carried out by the outer peripheral edges to generate chips, but a hole is already formed on the opposite side at least in the cutting moving of the end mill not to impede the discharge of chips. Therefore, the chips cut by the outer peripheral edge tip are stored in the sub-flute in a moment of cutting. However, since the chips are released from the sub-flute generally after half-rotation, the chips are not often moved up within the flute and discharged. That is, even if the sub-flute provided with the outer peripheral edge tip is in the form of a blind alley, no trouble occurs.

As a result, even if the outer peripheral edge tips are projected into the flute, there is no possibility that the chips are caught by the tips and stopped up in the flute, failing to smoothly discharge the chips. Further, in the construction in which both ends of the sub-flute provided with the outer peripheral edge tips are connected to the main flute, and the sub-flute does not form a blind alley, in the groove processing, even if the chips cut by the bottom edge and the outer peripheral edge are stopped up within the groove, the chips are smoothly moved within the main flute which has no projections of the outer peripheral edge chips, and discharged.

Also in case the bottom edge tip is mounted on the extreme end of the sub-flute passing through the extreme end of the body, the boring processing or enlarged hole processing similar to the case where the bottom edge tip is mounted only on the extreme end of the main flute is carried out and the discharge of chips is smoothly carried out as the processing progresses.

### BRIEF DESCRIPTION OF THE DRAWINGS

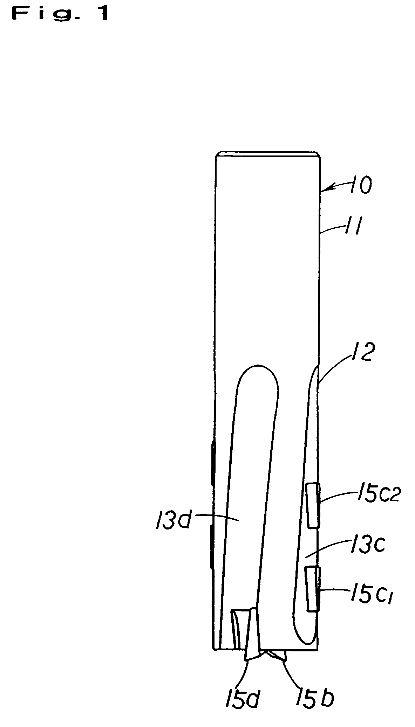

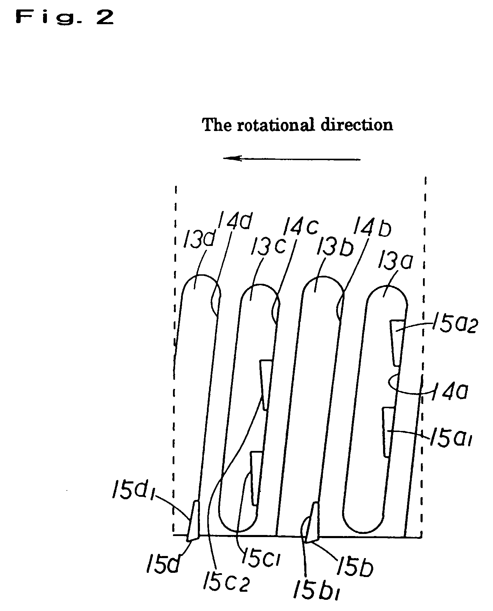

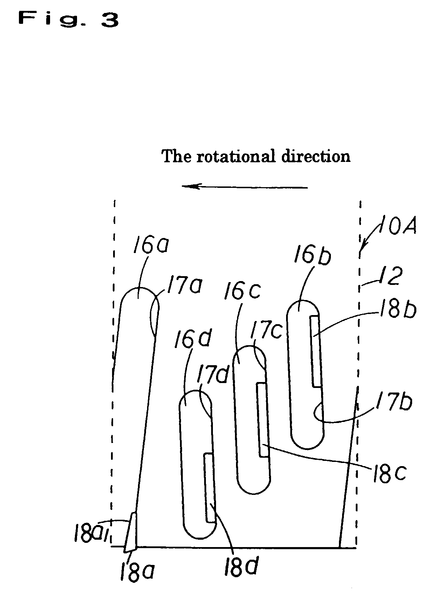

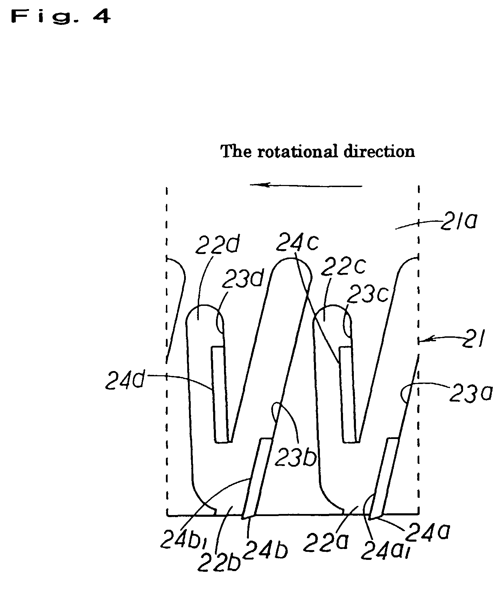

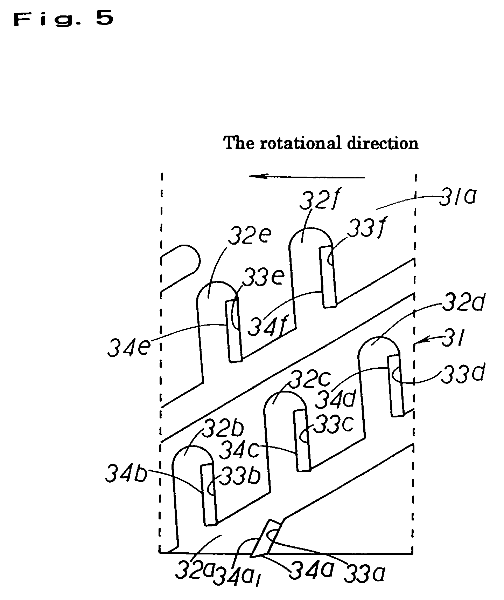

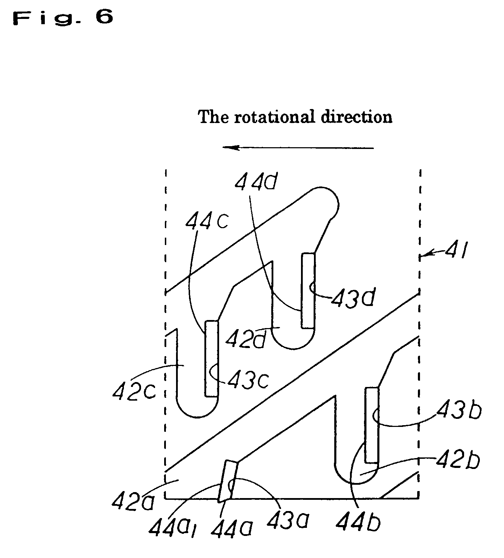

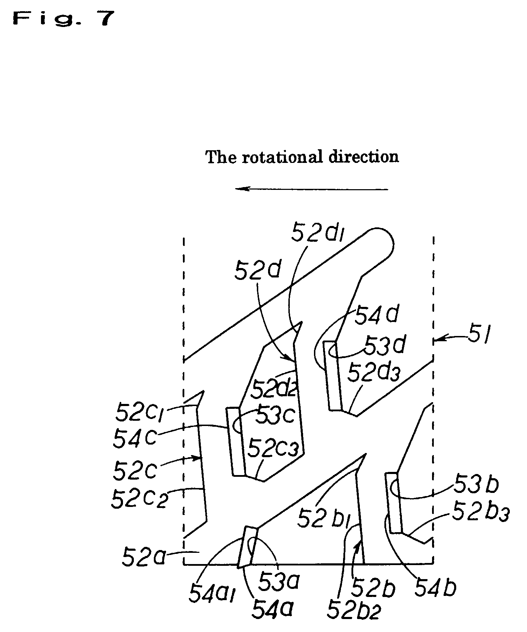

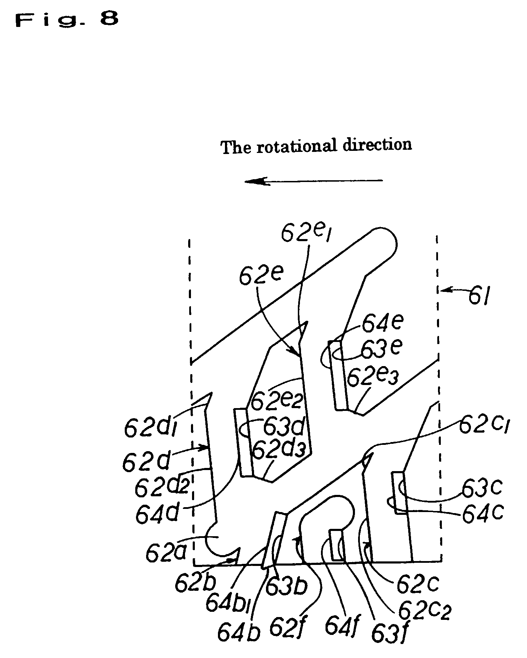

FIG. 1 is a front view schematically showing an end mill according to a first embodiment of the present invention. FIG. 2 is a developed view of a body portion of the end mill shown in FIG. 1. FIG. 3 is a developed view of a body portion of an end mill according to a modification of the first embodiment. FIG. 4 is a developed view of a body portion of an end mill according to a second embodiment. FIG. 5 is a developed view of a body portion of an end mill according to a third embodiment. FIG. 6 is a developed view of a body portion of an end mill according to a forth embodiment. FIG. 7 is a developed view of a body portion of an end mill according to a fifth embodiment. FIG. 8 is a developed view of a body portion of an end mill according to a sixth embodiment. FIG. 9 is a developed view of a body portion of an end mill according to prior art.

### BEST MODE FOR CARRYING OUT THE INVENTION

The embodiments of the present invention will be described hereinafter with reference to the drawings. FIGS. 1 and 2 show an end mill 10 according to a first embodiment in a perspective view and a body developed view, respectively.

The end mill 10 has a columnar shank 11 and a body 12 provided coaxially. In the body 12, four flutes (chip discharge grooves) 13a to 13d twisted positively with respect to the axis are provided at equal intervals in a peripheral direction. As shown in FIG. 2, out of the flutes 13a to 13d, the first and third ones are sub-flutes 13a and 13c whose extreme ends do not pass through the extreme end of the body 12, and the second and fourth ones are main-flutes 13b and 13d whose extreme ends pass through the extreme end of the body 12. Four tip seats 14a to 14d are provided on the rotational rear side of the flutes 13a to 13d. It is to be noted that the sub-flutes 13a and 13c may be passed through the extreme end of the body.

The first and third tip seats 14a and 14c have two outer peripheral edge tips 15al, 15a2, and two 15c1, 15c2, respectively, mounted thereon by soldering. The outer peripheral edge tips 15al, 15a2, 15c1, and 15c2 are so designed that the ends of the tips provided on other tip seats overlap each other, as shown in FIG. 2, and cutting areas at the time of rotational cutting partly overlap. In the present embodiment, as shown in FIG. 2, the outer peripheral edge tips 15al, 15a2, 15c1, and 15c2 are negative twisted edges since their peripheral thickness is diagonally changed in a direction of axis. The second and fourth tip seats 14b and 14d have one bottom edge tip 15b and one 15d, respectively, mounted at an extreme position by soldering. The bottom edge tips 15b and 15d are respectively formed with outer peripheral edges 15b1 and 15d1 to cut the outer periphery of the extreme end that cannot be cut by the outer peripheral edge tips. Each of the outer peripheral edges 15b1 and 15d1 is positive twisted edge whose peripheral thickness is diagonally changed in a direction of axis, as shown in FIG. 2.

In the end mill 10 constructed as described above, in the boring processing, the chips cut by the bottom edge tips 15b and 15d are smoothly moved within the main flutes 13b and 13d from which the outer peripheral edge tips 15a1, 15a2, 15c1 and 15c2 are not projected, and discharged. In the enlarged hole processing, the outer peripheral edge tips 15a1, 15a2, 15c1 and 15c2, and the outer peripheral edges 15b1 and 15d1 of the bottom edges 14b and 15d perform cutting to generate the chips. However, since a hole is already formed on the side opposite to at least the moving direction of cutting, the chips cut by the outer peripheral edge tips are stored in the sub-flutes 13a and 13c in a moment the chips are generated. However, generally, the chips are released from the sub-flutes 13a and 13c after half rotation and drop from the hole. Therefore, the chips are rarely moved up within the sub-flutes 13a and 13c and they are also rarely discharged. That is, even if the construction of the sub-flutes 13a and 13c provided with the outer peripheral edges is a blind alley, no trouble occurs.

As a result, even if the outer peripheral edge tips 15a1, 15a2, 15c1 and 15c2 are projected into the sub-flutes 13a and 13c, the chips are not caught by the outer peripheral edge tips 15a1, 15a2, 15c1 and 15c2 and the sub-flutes 13a and 13c are not internally stopped up with the chips. Further, since cutting is made in the form that the surface of the material to be cut is held down in the enlarged hole processing because of being negatively twisted of the outer peripheral edge tips 15a1, 15a2, 15c1 and 15c2, the ridge line of the surface is finely finished.

Further, in the above-described first embodiment, a flute (a chip discharge groove) according to a twisting direction of a tip cut edge or a bent flute need not be provided and a simple twisted groove or a straight groove is provided and a tip changed in thickness in an axial direction of the tip seat is mounted whereby a twisted edge is formed, thus improving the discharge property of chips. Further, since a complicated flute processing is not necessary, the manufacturing processing of the end mill 10 is easy, and the manufacturing cost can be reduced.

In the following, a modification of the first embodiment will be described hereinafter with reference to the drawings. In the modification, sub-flutes, whose extreme ends do not pass through the extreme end of the body 12 formed on the bodies surface except the main flute of the end mill 10A are provided to not one but plurality.

The end mill 10A has one main flute 16a twisted positively with respect to the axis and three sub-flutes 16b to 16d whose extreme ends do not pass through the extreme end of the body 12 ,twisted negatively with respect to the axis in the body 12, as shown in a development view of the body in FIG. 3. Four tip seats 17a to 17d are provided on the rotational rear side of the flutes 16a to 16d. Further, the sub-flutes 16b to 16d may pass through the extreme end of the body.

The tip seat 17a has one bottom edge tip 18a mounted at an extreme end position by soldering. The bottom edge tip 18a is formed with outer peripheral edge 18a1 to cut the outer periphery of the extreme end of the body. The outer peripheral edge 18a1 is positive twisted edge whose peripheral thickness is diagonally changed in a direction of axis. The tip seats 17b to 17d have each one of the outer peripheral edge tips 18b to 18d, respectively, mounted by soldering. The tips 18a to 18d are so designed that the ends of the tips provided on other tip seats overlap each other, and cutting areas at the time of rotational cutting partly overlap, as shown in FIG. 3.

Also, in the end mill 10A constructed as described above, in the boring processing, the chips cut by the bottom edge tip 18a are smoothly moved within the main flute 16a from which the outer peripheral edge tips are not projected, and discharged. In the enlarged hole processing, the outer peripheral edge tips 18b, 18c, 18d and the outer peripheral edge 18a1 of the bottom edge tip 18a perform cutting to generate the chips. However, since a hole is already formed on the side opposite to at least the moving direction of cutting, the chips cut by the outer peripheral edge tips are stored in the sub-flutes 16b to16d in a moment the chips are generated. However, generally, the chips are released from the sub-flutes 16b to 16d after half rotation of body 12 and drop from the hole. Therefore, the chips are rarely moved up within the sub-flutes 16b to 16d and they are also rarely discharged. That is, even if the construction of the sub-flutes 16b to16d provided with the outer peripheral edges is a blind alley, no trouble occurs.

As a result, the end mill pertaining to the modification can gain the similar advantages stated in the above-described embodiment such as that sub-flutes 16b to 16d are not internally stopped up with the chips, etc. Further, the enlarged hole processing can be carried out smoothly because of increasing the number of sub-flutes more than that of the main flutes.

Further, while in the above-described modification, the case of one main flute and three sub-flutes is shown, the present invention can be also applied to the case of two or more main flutes and the case of two or more sub-flutes between the main flutes. Further, the number of sub-flutes between the main flutes may be different each other.

In the following, a second embodiment will be described.

In the second embodiment, the end mill have two main flute 22a and 22b at equal intervals passed through the extreme end of the body 21 and twisted positively with respect to the axis, as shown in FIG. 4. And there are provided sub-flutes 22c and 22d branched toward the shank 21a and negatively twisted with respect to the axis on the rotational front side of the main flute 22a and 22b. Four tip seats 23a to 23d are provided on the rotational front side of the flutes 22a to 22d.

The first and second tip seats 23a and 23b have one bottom edge tip 24a and one 24b mounted at an extreme end position by soldering. The bottom edge tips 24a and 24b are formed with one outer peripheral edge 24a1 and one 24b1 to the outer periphery of them. The third and forth tip seats 23c and 23d have one outer peripheral edge tip 24c and one 24d, respectively, mounted thereon by soldering.

In the end mill constructed as described above, in the boring processing, the chips are smoothly moved within the main flute 22a and 22b from which the outer peripheral edge tips 24c and 24d are not projected, and discharged. In the enlarged hole processing, the outer peripheral edge tips 24c and 24d and the outer peripheral edges 24a1 and 24b1 of the bottom edge tips 24a and 24b perform cutting to generate the chips. However, since a hole is already formed on the side opposite to at least the moving direction of cutting, the chips cut by the outer peripheral edge tips are stored in the sub-flutes 22c and 22d in a moment the chips are generated. However, generally, the chips are released from the sub-flutes 22c and 22d after half rotation of the body 21 and drop from the hole. Therefore, the chips are rarely moved up within the sub-flutes 22c and 22d and they are also rarely discharged. In the groove processing, even if the chips are stopped up within the grooves, most of the chips cut by the bottom edge tips 24a and 24b and the outer peripheral edge tips 24c and 24d are smoothly moved within the main flute 22a and 22b from which the outer peripheral edge tips are not projected and discharged.

As a result, even if the outer peripheral edge tips 24c and 24d are projected into the sub-flutes 22c and 22d, the chips are not caught by the outer peripheral edge tips 24c and 24d and the sub-flutes 22c and 22d are not internally stopped up with the chips. Further, the sub-flutes 22c and 22d may be provided to be branched from the main flutes 22a and 22b toward the extreme end of the body 21 on the rotational rear end of the end mill.

In the following, a third embodiment will be described. The end mill according to the present embodiment is provided with one main flute32a which passes through the extreme end of a body 31 and at a positive large twisting angle with respect to the axis, as shown in a developed view of the body in FIG. 5. There are provided five sub-flutes 32b to 32f branched toward the shank 31a and negatively twisted with respect to the axis on the rotational front side of the main flute 32a. The tip seats 33a to 33f are provided on the rotational rear side of each of the flutes 32a to 32d.

The first tip seat 33a has one bottom edge tip 34a mounted at the extreme end position by soldering, and the outer peripheral side of the bottom edge tip 34a comprises an outer peripheral edge 34a1. The second to sixth tip seats 33b to 33f have each one of the outer peripheral edge tips 34b to 34f, respectively, mounted thereon by soldering. In the outer peripheral edge tips 34b to 34f and the outer peripheral edge 34a1 of the bottom edge tip 34a, as shown in FIG. 5, the ends of the tips provided on other tip seats overlap each other, and the outer peripheral cutting areas at the time of rotational cutting partly overlap.

In the end mill constructed as described above, when the boring processing takes place, the chips are smoothly moved within the main flute 32a from which the outer peripheral edge chips 34b to 34f are not projected, and discharged. Further, in the enlarged hole processing, the outer peripheral edge tips 34b to 34f and the outer peripheral edge 34a1 of the bottom edge tip 34a perform cutting to generate the chips. However, since a hole is already formed on the side opposite to at least cutting moving direction, the chips cut by the outer peripheral edge tips are stored in the sub-flutes 32b to 32f in a moment the chips are formed. However, the chips are released from the sub-flutes 32b to 32f generally after half rotation of the body 31 and drop from the hole. Therefore, the chips are rarely moved up within the sub-flutes 32b to 32f and rarely discharged.

Further, in the groove processing, even if the chips are stopped up within the grooves, the chips cut by the bottom edge tip 34a and the outer peripheral edge tips 34b to 34f almost are smoothly moved within the main flute 32a from which the outer peripheral edge tips are not projected and discharged. That is, even if the construction of the sub-flutes 32b to32f provided with the outer peripheral edge tips is a blind alley, no trouble occurs. As a result, even if the outer peripheral edge tips 34b to 34f are projected into the sub-flutes 32b to 32f, the chips are not caught by the outer peripheral edge tips 34b to 34f, and the sub-flutes 32b to 32f are not stopped up with the chips.

In the following, a forth embodiment will be described.

The end mill according to the present embodiment is provided with one main flute 42a which passes through the extreme end of a body 41 and at a positive large twisting angle with respect to the axis, as shown in a developed view of the body in FIG. 6. There are provided three sub-flutes 42b to 42d branched toward the extreme end and not twisted with respect to the axis on the rotational rear side of the main flute 42a. The tip seats 43a to 43d are provided on the rotational rear side of the flute 42a to 42d.

The first tip seat 43a has a bottom edge tip 44a mounted at the extreme end position by soldering, and the outer peripheral side of the bottom edge tip 44a comprises an outer peripheral edge 44a1. The second to fourth tip seats 43b to 43d have each one of the outer peripheral edge tips 44b to 44d, respectively, mounted thereon by soldering. In the outer peripheral edge tips 44b to 44d and the outer peripheral edge 44a1 of the bottom edge tip 44a, as shown in FIG. 6,the ends of the tips provided on other tip seats overlap each other, and the outer peripheral cutting areas at the time of rotational cutting partly overlap.

In the end mill constructed as described above, the actions and effects of the above-described first embodiment are provided similarly.

In the following, a fifth embodiment will be described.

The end mill according to the present embodiment is provided with one main flute 52a which passes through the extreme end of a body 51 and at a positive large twisting angle with respect to the axis, as shown in a developed view of the body in FIG. 7. There are provided three sub-flutes 52b to 52d branched toward the extreme end on the rotational rear side of the main flute 52a. The sub-flutes 52b to 52d have first portions 52b1 to 52d1 immediately after being branched from the main flute 52a positively twisted with respect to the axis, second portions 52b2 to 52d2 continuous thereto being slightly negatively twisted with respect to the axis, and third portions 52b3 to 52d3 continuous to the second portions 52b2 to 52d2 being negatively cut with respect to the axis only on the rotational rear side. The sub-flute 52b passes through the extreme end of the body 51, and the sub-flutes 52c and 52d have third portions 52c3 and 52d3 passed through on the rotational forward side of the main flute 52a. A tip seat 53a is provided on the rotational rear side at the extreme end of the main flute 52a, and tip seats 53b to 53d are provided on the rotational rear sides of the second portions 52b2 to 52d2 of the sub-flutes 52b to 52d.

The first tip seat 53a has a bottom edge tip 54a mounted at the extreme end position by soldering, and the outer peripheral side of the bottom edge tip 54a comprises an outer peripheral edge 54a1. The second to fourth tip seats 53b to 53d have outer peripheral edge tips 54b to 54d, respectively, mounted thereon by soldering. In the outer peripheral edge tips 54b to 54d and the outer peripheral edge 54a1 of the bottom edge tip 54a, as shown in FIG. 7,the ends of the tips provided on other tip seats overlap each other, and the outer peripheral cutting areas at the time of rotational cutting partly overlap.

In the end mill constructed as described above, when the boring processing takes place, the chips cut by the bottom edge tip 54a are smoothly moved within the main flute 52a from which the outer peripheral edge chips 54b to 54d are not projected, and discharged. Since the first portions 52b1 to 52d1 of the sub-flutes 52b to 52d are twisted positively with respect to the axis, the chips rarely flow into the sub-flutes 52b to 52d from the main flute 52a.

Further, in the enlarged hole processing, the outer peripheral edge tips 54b to 54d and the outer peripheral edge 54a1 of the bottom edge tip 54a perform cutting to generate the chips. However, since a hole is already formed on the side opposite to at least cutting moving direction, the chips cut by the outer peripheral edges are stored in the sub-flutes 52b to 52d in a moment the chips are formed. However, the chips are released from the sub-flutes 52b to 52d generally after half rotation of the body 51 and drop from the hole. Therefore, the chips are rarely moved up within the sub-flutes 52b to 52d and rarely discharged.

In the groove processing, even if the chips are stopped up within the groove, the chips cut by the outer peripheral edge tips 54b to 54d and the bottom edge tip 54a are smoothly released into the main flute 52a from the sub-flutes 52b to 52d because the rotational rear side of the third portions 52b3 to 52d3 is negatively cut with respect to the axis, and are smoothly moved within the main flute 52a from which the outer peripheral edge tips are not projected and discharged. As a result, even if the outer peripheral edge tips 54b to 54d are projected into the sub-flutes 52b to 52d, the chips are not caught by the outer peripheral edge tips 54b to 54d, and the sub-flutes 52b to 52d are not stopped up with the chips.

In the following, a sixth embodiment will be described.

In the end mill according to the present embodiment, as shown in a developed view of the body in FIG. 8, a body 61 is provided at the extreme end thereof with one main flute 62a which does not pass through the extreme end of the body 61 and at a positive large twisted angle with respect to the axis. There are provided four sub-flutes 62b to 62e branched toward the extreme end on the rotational rear side of the main flutes 62a. Further, between the sub-flutes 62b and 62c is provided a sub-flute 62f which is not communicated with the main flute 62a but passes through the extreme end of the body 61.

The sub-flute 62b passes through the extreme end of the body 61 immediately after being branched from the main flute 62a and is positively twisted with respect to the axis. In the sub-flute 62c, the first portion 62c1 provided immediately after being branched from the main flute 62a is positively twisted with respect to the axis, and the second portion 62c2 continuous thereto is slightly negatively twisted with respect to the axis and passes through the extreme end of the body 61. In the sub-flutes 62d and 62e, the first portions 62d1 and 62e1 provided immediately after being branched from the main flute 62a are positively twisted with respect to the axis, the second portions 62d2 and 62e2 continuous thereto are slightly negatively twisted with respect to the axis, and the third portions 62d3 and 62e3 continuous to the second portions 62d2 and 62e2 are negatively cut with respect to the axis only on the rotational rear side. With respect to the sub-flutes 62d and 62e, the third portions 62d3 and 62e3 pass through the rotational forward side of the main flute 62a.

The main flute 62a is provided with no tip seat. The first tip seat 63b is provided at the extreme end on the rotational rear side of the sub-flute 62b, and the second tip seat is provided on the rotational rear side of the second portion 62c2 of the sub-flute 62c. The third and fourth tip seats 63d and 63e are provided on the rotational rear side of the second portions 62d2 and 62e2 of the sub-flutes 62d and 62e. The fifth tip seat 63f is provided in the vicinity of the extreme end on the rotational rear side of the sub-flute 62f.

The first tip seat 63b has a bottom edge tip 64b mounted by soldering at the extreme end position thereof, and the outer peripheral side of the bottom edge tip 64b comprises an outer peripheral edge 64b1. The second to fifth tip seats 63c to 63f have outer peripheral edge tips 64c to 64f, respectively, mounted thereon by soldering. In the outer peripheral edge tips 64c to 64f and the outer peripheral edge 64b1 of the bottom edge tip 64b, the ends of the tips provided on other tip seats overlaps each other and the outer peripheral cutting areas at the time of rotational cutting partly overlap.

In the end mill constructed as described above, when the boring processing takes place, the chips cut by the bottom edge tip 64b are moved into the main flute 62a from the sub-flute 62b and are smoothly moved within the main flute 62a from which the outer peripheral edge chips 64c to 64f are not projected, and discharged. Since the first portions 62c1 to 62e1 of the sub-flutes 62c to 62e are twisted positively with respect to the axis, the chips rarely flow into the sub-flutes 62c to 62e from the main flute 62a.

Further, in the enlarged hole processing, the outer peripheral edge tips 64c to 64f and the outer peripheral edge 64b1 of the bottom edge tip 64b perform cutting to generate the chips. However, since a hole is already formed on the side opposite to at least cutting moving direction, the chips cut by the outer peripheral edges are stored in the sub-flutes 62b to 62f in a moment the chips are formed. However, the chips are released from the sub-flutes 62b to 62f generally after half rotation of the body 61 and drop from the hole. Therefore, the chips are rarely moved up within the sub-flutes 62b to 62f and rarely discharged.

In the groove processing, even if the chips are stopped up within the groove, the chips cut by the outer peripheral edge tips 64d and 64e and the bottom edge tip 64b are smoothly released into the main flute 62a from the sub-flutes 62b,62d and 62e because the rotational rear side of the third portions 62d3 and 62e3 of the sub-flutes 62d and 62e is negatively cut with respect to the axis and the sub-flutes 62b is positively twisted, and are smoothly moved within the main flute 62a from which the outer peripheral edge tips are not projected and discharged. As a result, even if the outer peripheral edge tips 64d and 64e are projected into the sub-flutes 62d and 62e, the chips are not caught by the outer peripheral edge tips 64d and 64e and the sub-flutes 62d and 62e are not stopped up with the chips.

In the above-described sixth embodiment, the outer peripheral edge tip 64f is provided close to the extreme end side and a twisting angle is made negative whereby also in the shallow groove processing, the surface of the material to be cut is cut in the form of held-down, thus finely finishing the ridge line of the surface. The cutting radius of the bottom edge tip 64b is made approximately 0.05 to 0.1 mm smaller than the cutting radius of the outer peripheral edge tip 64f, thus enabling the enhancement of the effect of finely finishing the ridge line.

While the tips shown in the above-described embodiments each are of the tipped edge type, it is to be noted that they can be of the inserted edge type (the exchangeable edge type). Further, in the tips shown in the above-described embodiments each, the size, the twisting angle, the twisting direction, the cutting diameter, the rake angle and the like can be suitably changed according to the purpose and use of cutting.

Furthermore, either bottom edge tip or outer peripheral edge tip need not be mounted on the entire flute.

Moreover, the tips can be changed in size to be made irregular. As a result, vibrations generated by the tips possibly offset each other to provide cutting less noises. Further, in the case of the end mill which performs no boring processing but groove processing by relatively moving the end mill at right angles from the side of wood, the bottom edge need not always be formed in the vicinity of the rotational axis of a tool. Further, the twisting angle and the twisting direction of the main flutes and sub-flutes can be likewise changed.

Further, while in the above-described embodiments each, a description has been noted about the end mill of the simple shape, the present invention can be also applied to various end mills such as a tapered edge end mill, a ball end mill, a forming end mill and the like.

### Industrial usability

The end mill of the present invention, as previously stated, is usable in the boring processing, the enlarged processing and the groove processing of various materials such as lumber, wooden materials, metal materials and plastics, etc., and has an excellent discharge property of chips produced in these processing.

## Claims

1. An end mill in which tips as cutting edges are secured to tip seats disposed along the outer periphery on the rotational rear side of plural flutes provided on a columnar body having a shank, characterized in that a main flute passing through an extreme end of said body and a sub-flute not passing through or passing through the extreme end are formed in the outer periphery of said body, a bottom edge tip is mounted only on the extreme end of said main flute, and an outer peripheral edge tip is mounted only on said sub-flute.

2. An end mill in which tips as cutting edges are secured to tip seats disposed along the outer periphery on the rotational rear side of plural flutes provided on a columnar body having a shank, characterized in that a main flute passing through an extreme end of said body and a sub-flute branched off from said main flute to the shank side are formed in the outer periphery of said body, a bottom edge tip is mounted only on the extreme end of said main flute, and an outer peripheral edge tip is mounted only on said sub-flute.

3. An end mill in which tips as cutting edges are secured to tip seats disposed along the outer periphery on the rotational rear side of plural flutes provided on a columnar body having a shank, characterized in that a main flute passing through an extreme end of said body and a sub-flute branched off from said main flute to the extreme end side are formed in the outer periphery of said body, a bottom edge tip is mounted only on the extreme end of said main flute, and an outer peripheral edge tip is mounted only on said sub-flute.

4. An end mill in which tips as cutting edges are secured to tip seats disposed along the outer periphery on the rotational rear side of plural flutes provided on a columnar body having a shank, characterized in that a main flute passing through an extreme end of said body and a sub-flute having at least one end communicated with said main flute are formed in the outer periphery of said body, a bottom edge tip is mounted only on the extreme end of said main flute, and an outer peripheral edge tip is mounted only on said sub-flute.

5. An end mill in which tips as cutting edges are secured to tip seats disposed along the outer periphery on the rotational rear side of plural flutes provided on a columnar body having a shank, characterized in that a main flute passing through or not passing through an extreme end of said body and a sub-flute having at least one end communicated with said main flute are formed in the outer periphery of said body, a bottom edge tip is mounted only on the extreme end of a flute passing through the extreme end of said body out of said main flute and said sub-flute, and an outer peripheral edge tip is mounted on a place where the outer peripheral edge tip does not obstruct the discharge and movement of chips in the flute on which the bottom edge tip is not mounted.

6. The end mill according to claim 5, wherein a sub-flute not communicated with said main flute and not passing through or passing through the extreme end of said body is added, and an outer peripheral edge tip is mounted on said sub-flute.
